# EUROPEAN PATENT SPECIFICATION

(11) **EP 2 075 945 B1**
(45) Date of publication and mention of the grant of the patent: **10.05.2017**
(21) Application number: 08172568.1
(22) Date of filing: 22.12.2008
(51) Int. Cl.: H04L 1/18, H04L 1/16

(54) **Radio communication apparatus and control method for radio communication system**
Funkkommunikationsvorrichtung und Steuerverfahren für ein Funkkommunikationssystem
Appareil de communication radio et procédé de commande pour système de communication radio

(30) Priority: 27.12.2007 JP 2007335565
(43) Date of publication of application: 01.07.2009
(73) Proprietor: Fujitsu Limited, Kawasaki-shi, Kanagawa 211-8588 (JP)
(72) Inventor: Tanaka, Yoshinori, Kawasaki-shi, Kanagawa 211-8588 (JP); Kawasaki, Yoshihiro, Kawasaki-shi, Kanagawa 211-8588 (JP); Obuchi, Kazuhisa, Kawasaki-shi, Kanagawa 211-8588 (JP); Tajima, Yoshiharu, Kawasaki-shi, Kanagawa 211-8588 (JP); Ito, Akira, Kawasaki-shi, Kanagawa 211-8588 (JP); Ohta, Yoshiaki, Kawasaki-shi, Kanagawa 211-8588 (JP); Wu, Jianming, Kawasaki-shi, Kanagawa 211-8588 (JP); Sugiyama, Katsumasa, Kawasaki-shi, Kanagawa 211-8588 (JP)
(74) Representative: Stebbing, Timothy Charles

(56) References cited:
- NOKIA SIEMENS NETWORKS ET AL: "UL Sounding Arrangement", 3GPP DRAFT; R1-073642, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20070815, 15 August 2007 (2007-08-15), XP050107238, [retrieved on 2007-08-15]
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 8)", 3GPP STANDARD; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.3.0, 1 December 2007 (2007-12-01), pages 1-121, XP050377578,
- NOKIA SIEMENS NETWORKS ET AL: "UL Sounding Reference Signal", 3GPP DRAFT; R1-072988, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Orlando, USA; 20070620, 20 June 2007 (2007-06-20), XP050106652, [retrieved on 2007-06-20]
- TEXAS INSTRUMENTS: "Sounding Reference Signal In Support of Scheduling Request in E-UTRA", 3GPP DRAFT; R1-074677_SR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Korea; 20071030, 30 October 2007 (2007-10-30), XP050108153, [retrieved on 2007-10-30]
- ERICSSON ET AL: "Framework for Scheduling Request and Buffer Status Reporting", 3GPP DRAFT; R2-074691 FRAMEWORK FOR SR AND BSR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jeju, Korea; 20071105 - 20071109, 12 November 2007 (2007-11-12), XP050603347, [retrieved on 2007-11-12]

## Description

This application is based upon and claims the benefit of priorityof the prior Japanese Patent Application No. 2007-335565, filed on December 27, 2007.

Certain aspects of the present invention discussed herein are related to a radio communication apparatus, which conducts radio communication and control thereof.

There are various known communication methods for using radio communication as a communication means.

The following is a description of Long Term Evolution (LTE) as an example of a radio communication system.

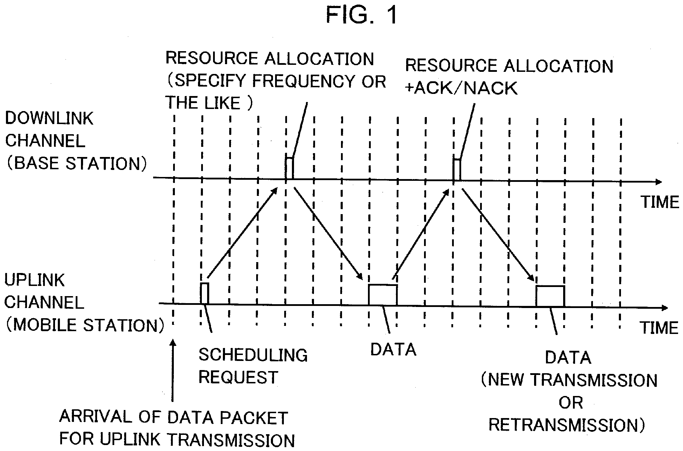

FIG.1 is a diagram describing a data transmission (uplink transmission) flow from a mobile station as an example of a radio communication apparatus to a base station as another example of a radio communication apparatus.

To communicate with the base station, the mobile station first transmits a random access signal by using a radio resource shared with other mobile stations for signal transmission. When receiving the random access signal, the base station transmits a response signal to the mobile station to establish uplink synchronization and allocates a radio resource for transmitting a scheduling request (SR) signal for requesting radio resource allocation and a (broadband) pilot signal (SRS: Sounding Reference Signal) to be transmitted broadly in a certain frequency band in which the radio resource may be allocated. If the radio resource for transmitting the scheduling request signal is already allocated to the mobile station, the above-described process may be omitted.

When data required to be transmitted is generated (arrives at a data processor) in the mobile station to which the radio resource for transmitting the scheduling request signal is allocated, the mobile station transmits the scheduling request signal (SR) to the base station as described in FIG. 1. By receiving the SR, the base station determines (selects) an uplink radio resource to be allocated to this mobile station, and then transmits to the mobile station allocation information (up-link (UL) allocation grant) of the radio resource used to notify the mobile station of the selected radio resource information (e.g. frequency).Therefore, the mobile station transmits the generated (arrived) transmission data by using the uplink resource specified by the notified radio resource information.

Since the mobile station is also allocated the radio resource for transmitting the SRS, the mobile station transmits the SRS by using this radio resource. The base station may tell which frequency part (band) is preferable to allocate to the mobile station by observing a reception state of the SRS. Thus, the base station allocates resource in a frequency range having, for example, the best reception quality.

When the uplink data is transmitted from the mobile station, the base station transmits reception result information (ACK/NACK). Here, the ACK (Acknowledgement response) shows that the data is received normally (reception without failure) . The NACK (Negative Acknowledgement response) shows that the data is not received normally (reception with failure).

To transmit the NACK, the uplink radio resource for retransmitting may be newly allocated to the mobile station. To transmit the ACK, the uplink radio resource for transmitting a next new data may be allocated to the mobile station.

Therefore, when receiving the ACK, the mobile station transmits new data by using the radio resource allocated to the mobile station. When receiving the NACK, the mobile station transmits retransmission data by using the radio resource allocated to the mobile station.

When the uplink data is transmitted, the reception result information (ACK/NACK) concerning downlink data reception may be multiplexed on the uplink data to be transmitted. Alternatively, the reception result information may be transmitted separately from the uplink data.

For example, if there is no uplink data, the reception result information may be transmitted through a physical uplink control channel (PUCCH). If there is uplink data, the data may be time-multiplexed with the reception result information and transmitted by using the radio resource allocated by the allocation information (UL allocation grant) of the radio resource.

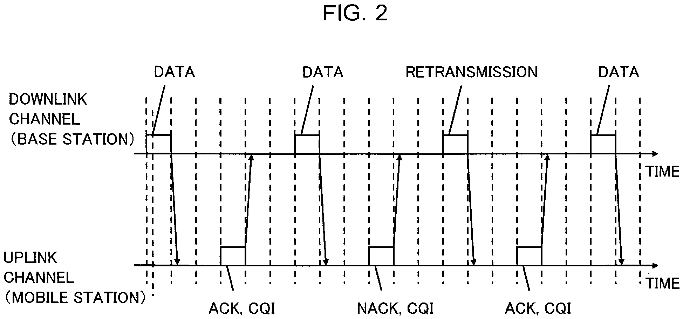

The following describes the downlink transmission with reference to FIG.2.

FIG.2 is a diagram describing a processing flow of data transmission (downlink transmission) from the base station to the mobile station.

As illustrated in FIG. 2, if there is downlink data to be transmitted, the base station first transmits a control signal (downlink scheduling information) that includes resource for transmitting the downlink data to the mobile station as a destination station and information of a transmission format (i.e. a modulation method, an encoding rate etc. ) through a physical downlink control channel (PDCCH) . There are a plurality of physical downlink control channels. The mobile station monitors each control channel to determine whether or not there is a control signal addressed to the mobile station. For example, the mobile station checks whether or not ID information of the mobile station is included. If the mobile station detects a control signal addressed to itself, the mobile station receives a physical downlink shared channel (PDSCH) based on the allocation information of the radio resource and transmission format information included in the control signal, and then obtains the downlink data.

If the downlink data is correctly decoded, the mobile station transmits an ACK signal to the base station. If not, the mobile station transmits a NACK signal to the base station. Upon receipt of the ACK signal, the base station then transmits new data. In response to the NACK signal, the base station transmits retransmission data.

Since the mobile station also observes (measures) the transmission quality of the downlink channel, the mobile station transmits an observation result as a channel quality indicator (CQI) to the base station.

When receiving the CQI, the base station selects a radio resource and selects a transmission format or the like, to provide a high reception quality to the mobile station.

The technique related to the above-described LTE is described in detail in 3GPP TS36.300 and 3GPP TS36.211.

As with the uplink data transmission described above, a radio communication apparatus requests the allocation of a radio resource for transmitting the data to another radio communication apparatus and then the other radio communication apparatus responds to this and follows procedures for allocating the radio resource so that the transmission control may be performed smoothly.

However, even though the request for allocating the radio resource is received, there may not be any radio resource available to be allocated. In addition, the allocation period may be continued.

In this case, even though the signal for requesting the allocation of the radio resource is transmitted, a radio communication apparatus is not allocated any radio resource (in a silent state where no response is given from the base station) and the radio communication apparatus again transmits the signal for requesting the allocation of the radio resource. Thus, traffic may be unnecessarily increased; battery usage of the mobile station may be wasted; or interference may be increased.

A similar situation may occur in an LTE-based system described above.

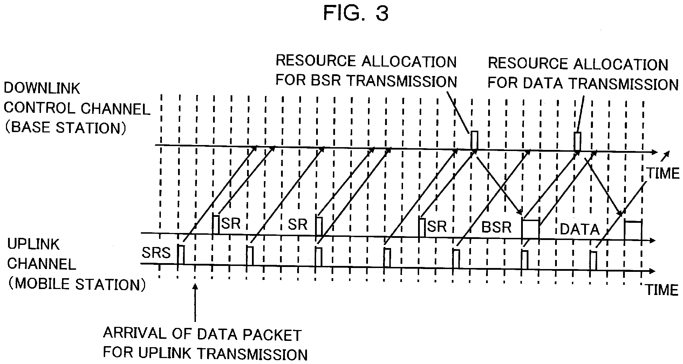

FIG.3 is a flow illustrating uplink radio resource allocation and data transmission in LTE. In this example, the mobile station periodically transmits the SRS and transmits the SR by generation (data arrives at a data processor) of an uplink data packet. However, it may happen that the base station cannot allocate any radio resource and goes to a silent state. Therefore, the mobile station repeats periodic transmission of the SRS and repeatedly transmits the SR. Then a third SR is finally received by the base station. Consequently, the base station allocates an uplink radio resource to the mobile station for transmitting a buffer status report (BSR) signal.

The base station adjusts the width of the frequency band of the uplink radio resource for the uplink data transmission to be allocated depending on a data amount shown by the BSR. The base station then notifies the mobile station of the allocated radio resource. The mobile station transmits the data by using the allocated radio resource.

Such requests for allocation of resource may be transmitted repeatedly in LTE because no radio resource is allocated as described above.

Specifically, such a problem may appear in a base station or the like corresponding to a femtocell whose capacity for radio resource allocation is small.

The 3GPP draft NOKIA SIEMENS NETWORKS ET AL: "UL Sounding Arrangement", R1-073642, discloses a scheduling request (SR) sent by the mobile station, an uplink grant sent by the base station in response to the SR and based on a Sounding Reference Signal (SRS) received from the mobile station. The SRS signal can be switched on/off by the base station using a flag in the UL grant. An embodiment of the present invention may enable the control of a signal transmission for requesting a radio resource allocation.

An embodiment of the present invention may enable the control of a signal transmission used to select a radio resource. Here, the signal used to "select" resource may be distinct from the signal used to "request" resource.

According to one aspect of the invention, there is provided a control method for a radio communication system, wherein a first radio communication apparatus (e.g., mobile station) transmits a radio signal for requesting allocation of a radio resource to a second radio communication apparatus (e.g. base station), and when the second communication apparatus receives a radio signal for requesting allocation of a radio resource from the first radio communication apparatus, the second radio communication apparatus selects a radio resource to be allocated to the first radio communication apparatus based on a radio signal used to select the radio resource and transmits information of the selected radio resource to the first radio communication apparatus, and the first radio communication apparatus transmits transmission data by using the radio resource specified by the information. The control method is characterized by regulating, by inhibiting, transmission of the radio signal used to select the radio resource to be allocated when the first radio communication apparatus receives a particular signal from the second radio communication apparatus, wherein the particular signal is a signal transmitted in a state in which the radio resource cannot be allocated.

Preferably the radio signal used to select the radio resource corresponds to either a pilot signal transmitted by using a plurality of frequencies in the particular frequency band or a radio signal which indicates a buffer status in the first radio communication apparatus.

Preferably the second radio communication apparatus should transmit the particular signal in response to a reception of the radio signal for requesting allocation of the radio resource.

Preferably the second radio communication apparatus should transmit the particular signal as broadcast information.

Preferably when the first radio communication apparatus receives a signal notifying that resource can be allocated from the second radio communication apparatus, the first radio communication apparatus releases the regulating the transmission of the radio signal used to select the radio resource.

The particular signal preferably includes a prospective timing at which resource may be available, and when the first radio communication apparatus receives broadcast information indicating that a radio resource can be allocated from the second radio communication apparatus at the prospective timing, the first radio communication apparatus releases the regulating transmission of the radio signal used to select the radio resource.

Preferably the signal used to select the radio resource corresponds to a pilot signal transmitted by using a plurality of frequencies in the particular frequency band and when the first radio communication apparatus receives the particular signal from the second radio communication apparatus, the first radio communication apparatus controls the regulation of (inhibits) the transmission signal for requesting allocation of a radio resource. Such regulation is released at the same time or at a prior time interval as (predetermined time before) the regulation of the transmission of the signal for requesting allocation of the radio resource, or is released at the same time as transmission of a report signal of the buffer amount or at an earlier interval than that time.

According to another aspect of the invention, there is provided a radio communication apparatus corresponding to a first radio communication apparatus in a radio communication system in which the first radio communication apparatus transmits a radio signal used to select a radio resource to a second radio communication apparatus, and when the second radio communication apparatus receives a radio signal for requesting allocation of a radio resource, the second communication apparatus selects a radio resource to be allocated from a particular frequency band based on the radio signal used to select the radio resource. Consequently, the first radio communication apparatus transmits transmission data by using the radio resource specified by the information of the radio resource. The radio communication apparatus is characterized by: a controller configured to regulate by inhibiting the signal used to select a radio resource to be allocated when the radio communication apparatus receives a particular signal from the second radio communication apparatus, wherein the particular signal is a signal transmitted in a state in which the radio resource cannot be allocated.

According to a further aspect of the invention, there is provided a radio communication apparatus corresponding to a second radio communication apparatus in a radio communication system in which a first radio communication apparatus transmits a radio signal used to select a radio resource, and when the second radio communication apparatus receives a radio signal for requesting allocation of a radio resource from the first radio communication apparatus, the second radio communication apparatus selects a radio resource to be allocated based on the radio signal used to select the radio resource. Consequently, the second radio communication apparatus transmits information of the selected radio resource to the first radio communication apparatus and the first radio communication apparatus transmits transmission data by using the radio resource specified by the information of the radio resource. The radio communication apparatus is characterized by: a transmitter configured to transmit a particular signal to the first radio communication apparatus to notify the first radio communication apparatus to regulate by inhibiting the radio signal used to select the radio resource to be allocated, wherein the particular signal is a signal transmitted in a state in which the radio resource cannot be allocated.

According to a still further aspect of the invention, a control method in a radio communication system is provided in which a first radio communication apparatus transmits a radio signal for requesting allocation of a radio resource to a second radio communication apparatus, and when the second radio communication apparatus receives the radio signal for requesting allocation of a radio resource from the first radio communication apparatus, the second radio communication apparatus selects a radio resource to be allocated and transmits information of the selected radio resource to the first radio communication apparatus. Consequently, the first radio communication apparatus transmits transmission data by using the radio resource specified by the information of the radio resource. The control method is characterized by: transmitting a particular signal from the second radio communication apparatus according to an allocation state of the radioresource;and regulatingtransmission byinhibitingthe radio signal for requesting allocation of the radio resource when the first radio communication apparatus receives the particular signal,
wherein the second radio communication apparatus transmits the particular signal when there is no radio resource that can be newly allocated.

Preferably the regulating the transmission of the radio signal for requesting allocation of the radio resource is not performed until a limit based on any time included in one or a plurality of time candidates.

Preferably the particular signal includes timing information at which the regulating transmission should be released and the second radio communication apparatus releases the regulating transmission of the radio signal for requesting allocation of the radio resource according to the timing information.

Preferably the second radio communication apparatus transmits the particular signal in response to a reception of either a random access signal or a scheduling request signal.

Preferably the signal for requesting allocation of the radio resource corresponds to either a random access signal or a scheduling request signal.

According to a yet further aspect of the invention, there is provided a radio communication apparatus corresponding to a first radio communication apparatus in a radio communication system in which the first radio communication apparatus transmits a radio signal for requesting allocation of a radio resource to a second radio communication apparatus and when the second communication apparatus receives a radio signal for requesting allocation of a radio resource from the first radio communication apparatus, the second radio communication apparatus selects a radio resource to be allocated and then transmits information of the selected radio resource to the first radio communication apparatus. Consequently, the first radio communication apparatus transmits transmission data by using the radio resource specified by the information of the radio resource. The radio communication apparatus is characterized by: a receiver configured to receive a particular signal transmitted from the second radio communication apparatus according to an allocation state of the radio resource; and a controller configured to regulate by inhibiting the signal for requesting allocation of the radio resource when the certain signal is received by the receiver, wherein the second radio communication apparatus transmits the particular signal when there is no radio resource that can be newly allocated.

According to one more aspect of the invention, there is provided a radio communication apparatus corresponding to a second radio communication apparatus in a radio communication system in which a first radio communication apparatus transmits a radio signal for requesting allocation of a radio resource to the second radio communication apparatus, and when the second radio communication apparatus receives a radio signal for requesting allocation of a radio resource, the second radio communication apparatus selects a radio resource to be allocated and then transmits information of the selected radio resource to the first radio communication apparatus. Consequently, the first radio communication apparatus transmits transmission data by using the radio resource specified by the information of the radio resource. The radio communication apparatus is characterized by: a transmitter configured to transmit a particular signal to notify the first radio communication apparatus to regulate, by inhibiting, the radio signal for requesting allocation of a radio resource to the second radio communication apparatus, and wherein the transmitter transmits the particular signal when there is no radio resource that can be newly allocated.

It is to be understood that both the foregoing general description and the following detailed description are exemplary and explanatory and are not restrictive of the invention, as claimed.

Reference is made, byway of example only, to the accompanying drawings in which:
FIG.1 illustrates a processing flow of data transmission from a mobile station to a base station;
FIG.2 illustrates a processing flow of the data transmission from the base station to the mobile station;
FIG.3 illustrates a flow of uplink resource allocation and data transmission;
FIG.4 is a configuration example of a base station 1;
FIG.5 is a configuration example of a mobile station 2;
FIG.6 illustrates a flow example of uplink resource allocation and data transmission (1);
FIG. 7 illustrates a configuration example of a frame used for uplink transmission (the case when there is no transmission data);
FIG. 8 illustrates a configuration example of a frame used for downlink transmission (1);
FIG. 9 illustrates a configuration example of a radio frame used for uplink transmission (the case when there is transmission data);
FIG.10 illustrates a flow of uplink resource allocation and data transmission (2);
FIG.11 illustrates a flow of uplink resource allocation and data transmission (3);
FIG.12 illustrates a flow of uplink resource allocation and data transmission (4);
FIG.13 illustrates a flow of uplink resource allocation and data transmission (5);
FIG.14 is a configuration example of a frame used for downlink transmission (2); and
FIG.15 illustrates a flow example of uplink resource allocation and data transmission (6).

Embodiments for carrying out the present invention are described with reference to the figures.

There will now be described a control method in which a first radio communication apparatus (e.g. mobile station) transmits a resource allocation request in the form of a radio signal for requesting allocation of a radio resource, on receipt of which a second communication apparatus (e.g. base station, this term including a femtocell serving station such as a so-called HeNB of LTE) selects some available resource and transmits information specifying this resource to the first radio communication apparatus. Consequently, the first radio communication apparatus transmits transmission data by using the radio resource thus allocated. The method includes the feature that the second radio communication apparatus transmits a particular signal (specific or special signal) according to the allocation state (availability) of resource and the first radio communication apparatus regulates (inhibits) the transmission of resource allocation request on receipt of the particular signal from the second radio communication apparatus.

Therefore, by transmitting the particular signal, it is possible to restrict resource allocation requests, thus reducing traffic pressure and so on.

The following is a description of the above-described LTE as an example of the radio communication system that enables data transmission by allocating resource depending on a resource allocation request. The same process may be performed on other radio communication systems by including a function for transmitting the particular signal. When LTE is applied to other systems, a processing method of a transmitting processing unit and a receiving processing unit may be changed according to the systems.

LTE has a configuration for performing transmission/reception of a radio signal by using Single Carrier Frequency Division Multiple Access (SC-FDMA) for uplink and Orthogonal Frequency Division Multiple Access (OFDMA) for downlink.

### "Configuration of the radio communication apparatus (base station 1)"

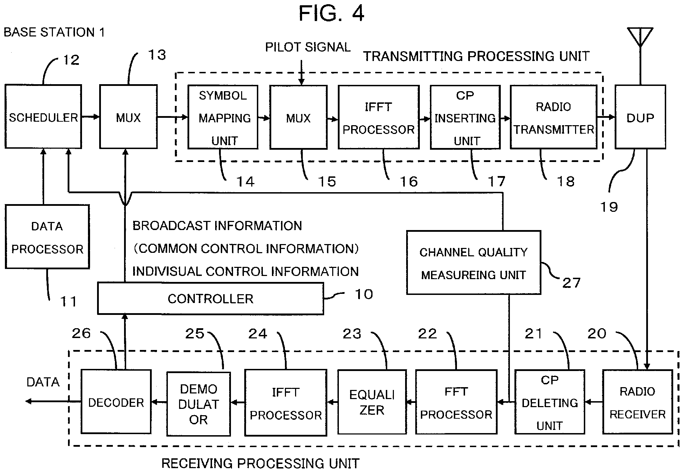

FIG. 4 shows a configuration example of the base station 1 as an example of the radio communication apparatus.

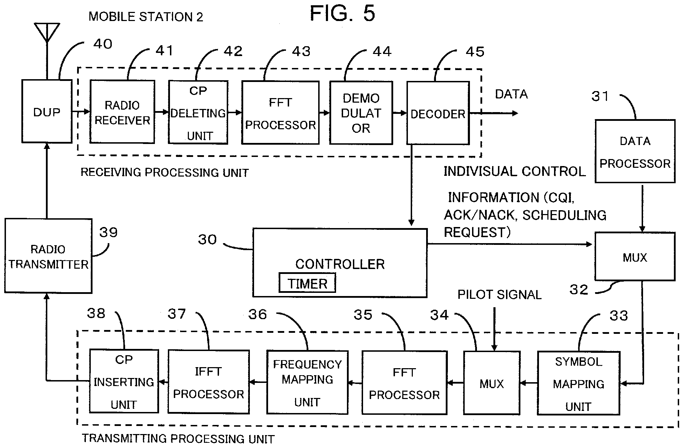

As depicted in FIG.4, numeral 10 indicates a controller that controls each unit. The controller 10 obtains information (such as control information) received from a mobile station 2 (Fig. 5) as an example of the radio communication apparatus by receiving processing units (20 to 26). By generating and transmitting a control signal (broadcast information and individual control information) to the transmitting processing units (14 to 18), the controller 10 performs transmission to the mobile station 2.A particular signal (for example, zero allocation information and back-off time), allocation information of the selected radio resource (UL allocation Grant), and reception result information (ACK/NACK) are typical examples of the control signal to be generated.

Numeral 11 indicates a data processor. Numeral 12 indicates a scheduler. The data processor 11 gives data that is given from an upper side of a connected mobile network and addressed to a plurality of mobile stations including the mobile station 2, to the scheduler 12. The scheduler 12 controls the order for transmitting data to each mobile station to determine a transmission schedule and then relays the transmission data to a multiplexer 13 so that the data addressed to each mobile station is transmitted according to the determined schedule. It is preferable that the transmission data is given error-correcting encoding (turbo encoding or the like) before transmission.

The scheduling may be performed by using the CQI information reported from the mobile station and various parameters such as QOS (Quality of Service).

Numeral 13 indicates a multiplexer. The multiplexer 13 multiplexes the control information (that includes a particular signal described later) generated by the controller 10 with the data and then transmits this information to a symbol mapping unit 14.

The symbol mapping unit 14 performs mapping of the control signals to a particular signal points. A multiplexer 15 multiplexes the signal that is given the mapping processing and a pilot signal which is used by mobile station 2 to measure a CQI which then relays the signal as a signal corresponding to a plurality of sub-carriers to an IFFT processor 16.

The Inverse Fast Fourier Transformation (IFFT) processor 16 performs the conversion processing from a frequency domain to a time domain on the signal corresponding to each sub-carrier before outputting the transmission signal.

A Cyclic Prefix (CP) inserting unit 17 copies a part of the last part of the symbol of the transmission signal to a symbol head part to form a so-called guard interval (GI) which then relays the guard interval to a radio transmitter 18.

Numeral 18 indicates a radio transmitter. The radio transmitter 18 performs frequency conversion processing (up conversion), amplification processing and so on as necessary for radio transmission and then transmits the radio signal from an antenna through a DUP 19 as a transmission/reception duplexer. A plurality of antennas may be provided for performing Multi Input Multi Output transmission and reception of radio signals or for constructing an array antenna system that adjusts a beam direction by weighting control for transmission and/or reception of radio signals.

The signal received from the antenna is relayed to a radio receiver 20.

The radio receiver 20 performs the removal of unnecessary wave signals, amplification processing and the like on the received signal and then transmits the signal to a CP deleting unit.

Numeral 21 indicates a CP deleting unit. The CP deleting unit 21 removes the CP added by the mobile station 2 before giving the signal to an FFT processor 22. The Fast Fourier Transformation (FFT) processor 22 converts the received signal of the time domain into a signal of the frequency domain. Then the signal is equalized by an equalizer 23 to correct distortion and is then given to the IFFT processor 24.

The IFFT processor 24 again converts the signal of the frequency domain into a signal of the time domain and then gives the signal to a demodulator 25.

The demodulator 25 demodulates the received signal and then relays the signal to a decoder. A decoder 26 performs decoding processing (for example, error correcting decoding process such as turbo decoding) on the demodulated signal, and then outputs a decoded result. The data is transferred to a (mobile) network side. The control signal is relayed to the controller 10. A signal for requesting allocation of a radio resource (e. g. SR), a signal used for allocating a radio resource (e.g. SRS and BSR) (also referred to as a signal used to select resource), reception result information (ACK/NACK), reception quality information (CQI) and so on are provided as examples of a typical control signal relayed to the controller 10.

Numeral 27 indicates a channel quality measuring unit. The channel quality measuring unit 27 measures reception quality of the received signal received by the radio receiver 20 and then relays a measurement result to the scheduler 12.

Next, referring to FIG.5, a description is made of an example configuration of the mobile station 2 as an example of the radio communication apparatus.

### "Configuration of radio communication apparatus (mobile station 2)"

FIG.5 illustrates a possible configuration of the mobile station 2 as an example of the radio communication device.

In FIG.5, numeral 30 indicates a controller that controls each unit. The controller 30 obtains information (such as control information) received from the base station 1 as an example of the radio communication apparatus by the receiving processing units (41 to 45). Further, by generating a control signal (individual control information) and then giving the control signal to the transmitting processing units (33 to 38), the controller 30 transmits the control signal to the base station 1. A signal for requesting allocation of a radio resource (e.g. SR), a signal used for allocating the resource allocation (e.g. BSR), reception result information (ACK/NACK), reception quality information (CQI) and so on are given as typical examples of the control signal to be generated. Further, the error correcting encoding processing may be performed on the control signal before transmission.

Numeral 31 indicates a data processor. The data processor 31 relays the information input by an input unit (not shown) or data generated inside the apparatus to a multiplexer 32. It is preferable that the data is given the error correcting encoding processing such as turbo encoding before transmission.

The multiplexer 32 multiplexes the control signal given from the controller 30 and the data from the data processor 31 and then relays the data to a symbol mapping unit 33.

The symbol mapping unit 33 performs mapping of the control signals to the particular signal points. A multiplexer 34 multiplexes the signal provided by the mapping processing and the pilot signal such as an SRS (may be considered as a kind of control signal) and then relays the signal to an FFT processor 35.

The FFT processor 35 converts the input signal from the signal of the time domain into the signal of the frequency domain and then relays the output to a frequency mapping unit 36.

The frequency mapping unit 36 performs frequency mapping to locate the signal in the particular radio resource (frequency band) allocated to the base station 1.

Numeral 37 indicates an IFFT processor. The IFFT processor 37 converts the signal that is given the frequency mapping into a signal of the time domain and then relays the signal to a CP inserting unit 38. As with the base station 1, the CP inserting unit 38 relays the transmission signal to a radio transmitter 39 by inserting a CP.

The radio transmitter 39 performs up conversion, amplification processing as necessary for the given transmission signal and then transmits the transmission signal as a radio signal from the antenna through a DUP 40 as a transmission/reception duplexer.

In this manner, the mobile station 2 transmits the radio signal corresponding to an SC-FDMA system.

The received signal received from the base station 1 by the antenna is given to a radio processing unit 41 through the DUP 40.

The radio receiver 41 performs unnecessary radio wave removal, necessary amplification processing or the like on the received signal, and then relays the received signal to a CP deleting unit 42.

The CP deleting unit 42 deletes a CP of the received signal and then relays the signal to an FFT processor 43.

The FFT processor 43 converts the received signal in which the CP is removed into a signal of the frequency domain and then outputs the signal.

Numeral 44 indicates a demodulator. The demodulator 44 performs demodulation processing on the signal corresponding to each sub carrier from the FFT processing unit 43 and then relays the demodulated signal to a decoder 45.

The decoder 45 performs error correcting decoding processing such as turbo decoding on the demodulated signal, relays the data to an output unit (not shown), and relays the data to a data processor 31.

The decoder 45 also provides a control signal to the controller 30.

The particular signal (e.g. zero allocation information and a back-off time), allocation information of a selected radio resource (UL allocation Grant), reception result information (ACK/NACK) and so on are given as typical examples of the control signal.

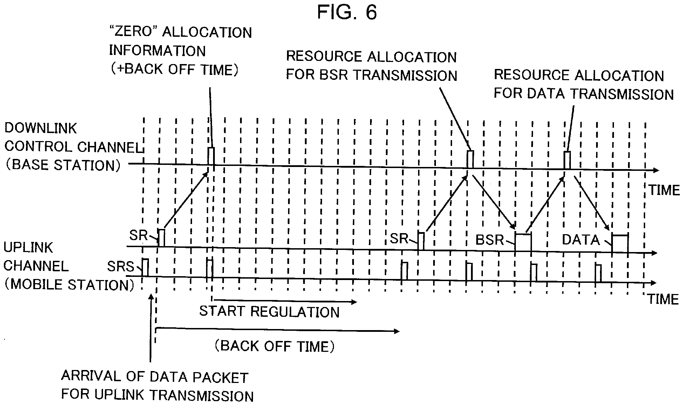

Next, referring to FIG.6, a description is provided of the radio communication performed between the base station 1 and the mobile station 2.

### "Flow of processing (1)"

FIG.6 illustrates a flow example of uplink resource allocation and data transmission (1).

In this example, the mobile station 2 is in a state where the mobile station 2 can transmit uplink control signals to the base station 1. For example, the mobile station 2 has established uplink synchronization with the base station 1 by transmitting a random access signal. Subsequently, the mobile station is in a state in which the mobile station 2 may transmit each control signal by using the specified uplink channel.

The mobile station 2 transmits an SRS signal through the uplink channel. The SRS signal is a signal that is used when the uplink radio resource is allocated by the base station 1. For example, the SRS may be a known pilot signal transmitted by using a plurality of frequencies in a particular band (B: band width=BW1) where the base station may allocate the radio resource. This signal has a wide bandwidth in the a particular band B, which is useful in selecting the radio resource by the base station 1.

In this example, the mobile station 2 periodically transmits the SRS in a particular time period. However, the SRS transmission may be limited to the same time as the SR. The SRS is transmitted in response to the SR. However, the SRS may be transmitted earlier than the SR.

The mobile station 2 periodically transmits the SRS as shown in FIG. 6. However, when uplink packet data is generated (uplink packet data arrives) in the data processor 31, the controller 30 transmits the SR to the base station 1 by generating and relaying the SR to the multiplexer 32.

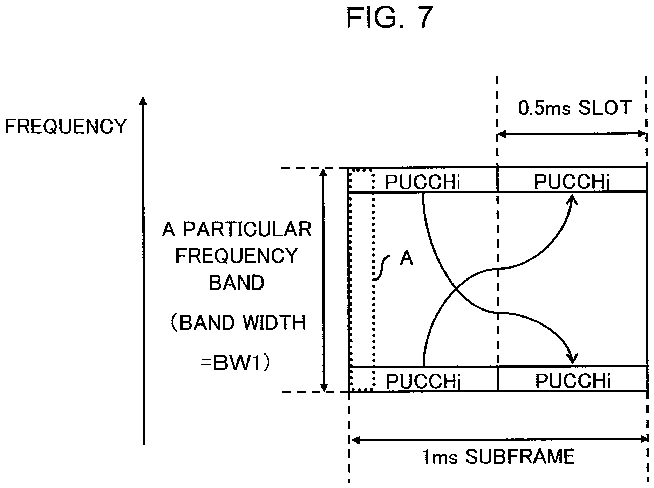

FIG. 7 illustrates a configuration example of a frame used for uplink transmission.

As an example, a radio frame with a length of 10 ms is one radio frame. One radio frame is divided into 20 slots of 0.5 ms. Two slots are included in one sub-frame.

PUCCHi and PUCCHj are two up control channels, and each frequency hop occurs at a border of the slot that may be in the middle of a 1 ms sub-frame.

The mobile station 2 is allocated either the PUCCHi or the PUCCHj as an up control channel from the base station 1.

For example, if the mobile station 2 is allocated the PUCCHj, the mobile station 2 transmits the SR by using this PUCCHj. The SR includes a signal for requesting allocation of the radio resource for uplink data transmission.

The SRS may be transmitted by using the radio resource of the part included in a dotted frame shown in FIG.7-A (for example, one symbol from the head of the radio sub-frame). At this time, the SRS signal may be transmitted over the particular frequency band. Furthermore, the SRS signal may be divided into a plurality of frequencies to be transmitted according to a particular rule. The frequency used for transmitting the PUCCH may be excluded to transmit the SRS signal.

To transmit the SRS at the same time as when the PUCCH is transmitted, it is possible to shorten the length of the PUCCH of the first slot by shifting the start time of the PUCCH of the first slot to a later point of time or just not transmitting the data in an overlapped part.

The receiving processing unit of the base station 1 receives the SR transmitted from the mobile station 2 and performs a decoding process on the SR if necessary and relays the data included in the SR to the controller 10. When the base station 1 receives the SRS, the channel quality measuring unit 27 that measures a channel quality specifies the frequency band in which reception is relatively good of the particular frequency band and notifies this frequency information to the scheduler 12.

By receiving the SR, the controller 10 recognizes that the mobile station 2 requests allocation of uplink radio resource and then performs radio resource allocation processing.

In this case, however, if all of the uplink radio resource is already allocated to other mobile stations, or for example if the allocation state of the radio resource shows that it is difficult to allocate the radio resource to the mobile station 2, the controller 10 generates a particular signal, relays that particular signal to the multiplexer 13 and then transmits the signal to the mobile station 2.

The particular signal is a signal in which the mobile station is capable of performing certain operations by detecting this particular signal.

In this case, the content of the particular signal indicates that the radio resource allocation may not be performed ("zero" radio resource is allocated).

FIG. 3 illustrates a configuration example of a frame used for downlink transmission.

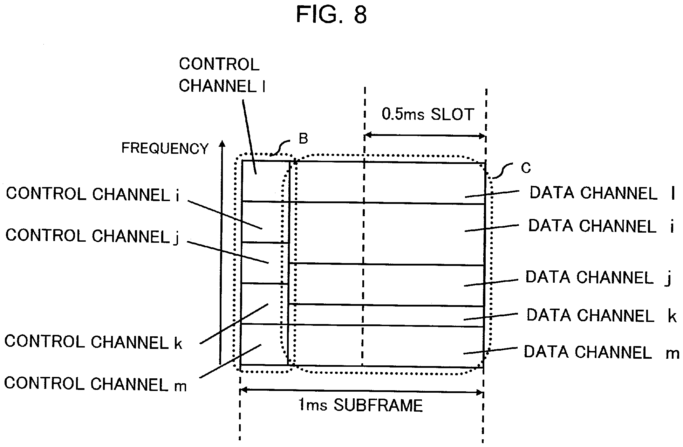

As with the uplink, two 0.5 ms slots are included in one 1 ms sub-frame. At a head part of the first slot, a transmission area of a control channel surrounded by dotted line B (e. g. PDCCH) is provided. Here, five control channels are provided: i, j, k, l, and m. In FIG. 8, the control channels are formed in a gathered frequency area. However, the control channels may be distributed so as not to overlap each other. Each control channel may include ID (Identification) information of mobile station 2. For example, the ID of the mobile station 2 may be included in the control signal or the control signal may be multiplied by the ID.

If the capacity of the control channel is large enough to include a message, the particular signal (e.g. a signal indicating that no radio resource can be allocated) may be transmitted in the control channel. Furthermore, of the shared data channels (for example, PDSCH) shown by a surrounding dotted line C, the control channel includes the information for specifying a corresponding data channel (any of i, j, k, 1, or m).

For example, the control channel i includes frequency information and transmission parameters (such as modulation scheme and/or (en) coding rate) used for transmission of the data channel i. This allows the mobile station 2 to receive the data transmitted through the data channel i by receiving the control channel i.

Therefore, as an example, when transmitting the particular signal to the mobile station 2, the base station 1 transmits the information (such as frequency information) used to specify the data channel i for data transmission to the mobile station 2 via the control channel i as well as the control signal that includes the ID of the mobile station 2 and the particular signal through the control channel i.

In FIG.8, allocation order of the control channel and the data channel are matched. However, the order is not necessarily matched.

When the particular signal is transmitted from the base station 1, the mobile station 2 receives the particular signal through the receiving processing unit and relays the received signal to the controller 30.

Since the controller 30 detects that the particular signal is received from the base station 1, the controller 30 performs a certain operation. That is, the controller 30 controls the transmission of the (SR) signal for requesting allocation of a radio resource.

Since no radio resource is allocated from the base station 1 even though the SR as a request for an allocation is transmitted, the control of the retransmission of the SR is usually performed repeatedly. However, in this case, the transmission of the SR is regulated by receiving the particular signal.

The SRS is a signal used for a purpose that is different from that of the SR. When receiving the particular signal, the controller 30 of the mobile station 2 regulates the transmission of the SRS. Therefore, the base station 1 does not have to receive the SRS, observe or analyze the SRS.

In this example, the controller 30 regulates the transmission of the SRS transmitted in the certain period. In FIG. 8, since a second SRS has already been transmitted when the certain signal is received, the controller 30 regulates a subsequent transmission of the SRS.

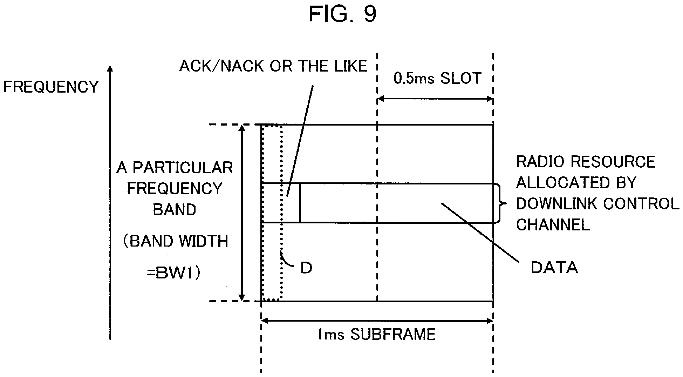

As described above, it is possible to reduce unnecessary transmission of the SR. Furthermore, the SRS, a signal used for a purpose that is different from that of the SR, is used to select the frequency to be allocated to the mobile station 2 by the base station 1 of the particular frequency band (BW (width=BW1)) in Fig. 9. It is possible to reduce the number of transmissions of the SRS by the transmission of the particular signal.

By the transmission of the particular signal, regulation control is performed by the mobile station 2. The present embodiment may include a structure for releasing the regulation as follows.

### "Release of regulation"

The controller 30 of the mobile station 2 regulates the transmission of the SR by receiving the particular signal and performs the regulation control to regulate (inhibit) the transmission of the SRS. However, the regulation may be released by using an internal timer. For example, when receiving the particular signal, the controller 30 sets a certain time T to the timer. When receiving a notification of the passage of time T from the timer, the controller 30 permits the release of the transmission of the SR and SRS. Preferably, the regulation of the transmission of the SRS is released earlier than that of the SR. The regulation of the transmission of the SRS may be released at the same time as that of the SR. At the time of allocation of the radio resource in response to the SR, if the base station 1 receives the SRS at the same time as or earlier than the SR, it is possible to allocate resource based on the prevailing radio conditions. It is preferable that the SRS is received by the base station 1 at the time that is close to the time point of the allocation of the radio resource because the base station 1 may reflect the latest state of the radio quality to the allocation.

The time T is a single value. However, one of a plurality of possible times: T0 to TN (N is a value that is two or more) may be set as a certain time to the timer. Various selective algorithms may be used. The mobile station may generate random numbers to be distributed between mobile stations and set Ti (i is zero or more and less than N) corresponding to a reminder i from the random number divided by N+1 as a certain time to the timer.

Further, the regulation may be released by the arrival of a certain time. For example, each radio frame may be indicated by a number and then the controller 30 may release the regulation when a certain radio frame arrives.

Further, the controller 30 obtains timing information by which the regulation should be released from the base station 1 and then may release the regulation according to the timing information.

For example, the controller 10 of the base station 1 generates and gives a certain signal that includes a back-off time to the transmitting processing unit (transmits the certain signal through the control channel (PDCCH) or the data channel (PDSCH)).

Then the controller 30 of the mobile station 2 detects the back-off time, performs the regulation over the time specified by the back-off time (Tb), and then releases the regulation.

For example, as shown in FIG.6, the transmission timing interval of the SR may be a starting time, and then the regulation specified by the Tb is performed. The starting time may be another timing interval such as a reception timing interval of the particular signal.

The mobile station 2 detects that the condition of the regulation release is satisfied and then performs transmission of the SR to request an allocation of the radio resource again because there is an uplink data packet to be transmitted.

In this example, the SRS is transmitted from the mobile station 2 earlier in time than the SR.

When receiving the SR, the controller 10 of the base station 1 confirms whether resource may be allocated according to the passage of the regulation time. If it is detected that the allocation may be performed, the controller 10 of the base station 1 generates a signal for allocating a radio resource to transmit a buffer status report signal (BSR) and then makes a transmitting processing unit transmit the signal, so that the amount of bandwidth required for the allocation of the data transmission can be determined. At this time, since the SRS is received from the mobile station 2, the frequency of the radio resource to be allocated may be in a frequency band that shows a good reception quality by the SRS.

The mobile station 2 finds a buffer amount of the data processor 31 that is also used as a buffer storing data to be transmitted and then reports (transmits the BSR) the buffer amount to the base station 1 by using the allocated radio resource.

By using the BSR or the SRS (the latest SRS or an accumulated SRS), the controller 10 of the base station 1 selects and transmits to the mobile station 2 the required frequency bandwidth and frequency part as the information of the radio resource for the data transmission.

Therefore, the mobile station 2 performs data transmission according to the information of the selected radio resource.

FIG.9 illustrates a configuration example of the radio frame (in the case when there is the transmission data) used for the uplink transmission.

As illustrated in FIG. 7, the radio sub-frame that includes two slots is used to transmit the data by the radio resource specified by the base station 1. When receiving the downlink data from the base station 1, the mobile station 2 may transmit the reception result (ACK/NACK) or the CQI by time-multiplexing in the data part. The information of the radio resource indicates the radio resource (e.g. frequency) for transmission of DATA as an example.

In the example described above, the transmission regulation of the SRS is released earlier than that of the SR. However, the transmission regulation of the SRS may be released at the same time as or earlier than the transmission of the BSR. This may be used to select the radio resource for the data transmission.

The SRS, the SR, and the BSR are transmitted separately. However, the SR, the BSR, and the SRS may be transmitted at the same time.

If the particular signal is not transmitted from the base station 1 (in the case of silent) even though the SR is transmitted, the mobile station 2 may transmit the SR again without regulating the transmission of the SR or other regulation signals.

Further, after the transmission of the SR, the data is transmitted after the BSR is transmitted. However, the data transmission may be performed by using the radio resource that is allocated to the SR. For example, steps for transmitting the BSR are omitted or the data and the BSR are multiplexed and transmitted.

### "Processing flow (2)"

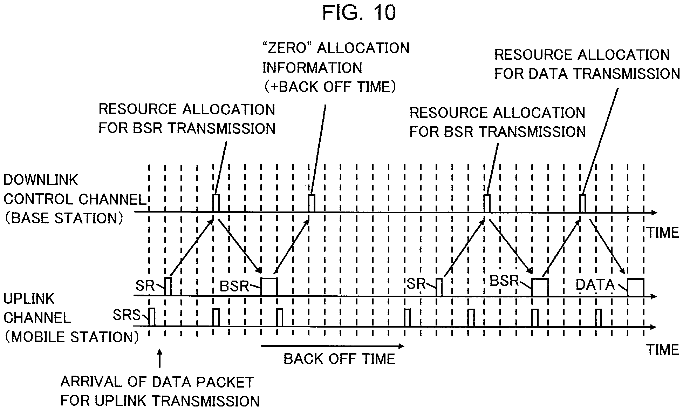

FIG.10 illustrates a flow of uplink resource allocation and data transmission (2).

In FIG. 6 the base station 1 transmits the particular signal according to the reception of the SR. However, in this case, the base station 1 transmits the particular signal according to reception of the BSR. Other process basically may be the same as the flow of data transmission (1).

That is, when receiving a first SR from the mobile station 2, the controller 10 of the base station 1 determines whether or not the allocation of resource for the transmission of the BSR is possible. If yes, the controller 10 of the base station 1 allocates the radio resource for the transmission of the BSR to the mobile station 2, and then transmits the information of the allocated radio resource via the control channel (PDCCH) or the data channel (PDSCH).

The controller 30 of the mobile station 2 detects the information of the allocated radio resource and then transmits the BSR by using the radio resource. However, the controller 10 of the base station 1 determines that it is difficult to allocate the band according to the BSR. The following are possible cases: the case that the situation is changed by the reception of the SR; the case that the data amount to be transmitted is large so that it is difficult to allocate bandwidth sufficient for the data amount; and the case that the transmission has waited for a long period to give preference to other mobile stations because the data amount to be transmitted is small.

In any case, the base station 1 transmits the particular signal because it is difficult to allocate the radio resource for the data transmission to the mobile station 2. The particular signal may be the particular signal described earlier.

The controller 30 of the mobile station 2 performs the regulation control described above and performs the same process by the release shown above.

### "Flow of processing (3)"

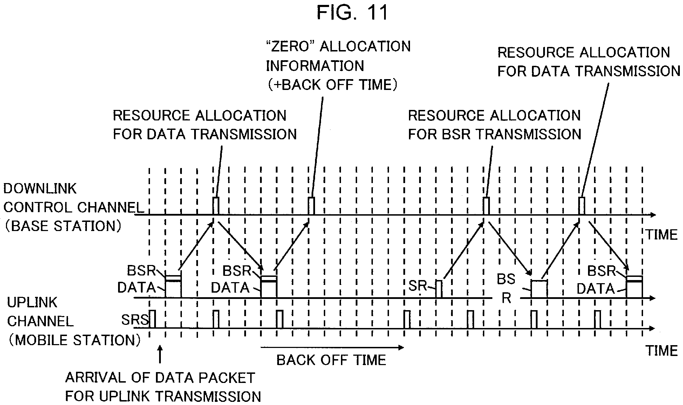

FIG.11 illustrates a flow of uplink resource allocation and data transmission (3).

In FIG.6, the mobile station 2 does not perform the data transmission. However, in this example, it is assumed that the mobile station 2 has already performed the data transmission. By multiplying the data by the BSR, it is assumed that the buffer state is reported to the base station. Other processes basically may be the same as that of the flow of data transmission (1).

The mobile station 2 periodically transmits the SRS, multiplies the data by the BSR, and performs the multiplexed data transmission by using the radio resource that is allocated by the base station 1.

That is, in the frame illustrated in FIG.9, the mobile station 2 transmits the data after multiplexing the area shown by DATA by the BSR or storing the BSR in the area shown as ACK/NACK for example.

The controller 10 of the base station 1 decodes the received data by the decoding unit 26, and then performs the error correcting process on the decoding result by using a CRC check bit for example to determine whether or not the reception is successful. If the reception is successful, the controller 10 of the base station 1 generates and gives the ACK signal to the multiplexer 13. If not, the controller 10 of the base station 1 generates and gives the NACK signal to the multiplexer 13.

The controller 10 of the base station 1 selects the radio source for transmitting the new data or the retransmission data to the mobile station 2 according to the ACK/NACK and then transmits the data with the reception result (ACK/NACK) through the control channel (PDCCH) or the data channel (PDSCH) of FIG. 8.

Selection of the radio resource is performed by adjusting the bandwidth to form a radio resource with a required size as well as by selecting a preferable frequency part by the SRS.

The mobile station 2, which receives a reception result and allocation of a radio resource, transmits corresponding data and BSR.

However, in this case, the base station 1 determines that resource cannot be allocated to the mobile station 2 because of the above-described circumstances, and then transmits the particular signal.

The controller 30 of the mobile station 2 receives the particular signal and then regulates the transmission of the SR, the BSR, and the SRS.

The regulation release may use any of the methods described above. In this example, the SRS is transmitted earlier than the SR.

After the regulation is released, a series of processing including such as transmission of SR, allocation of a radio resource for BSR transmission, transmission of BSR, allocation of a radio resource for data transmission, and transmission of multiplexed data including data and BSR are performed.

### "Flow of processing (4)"

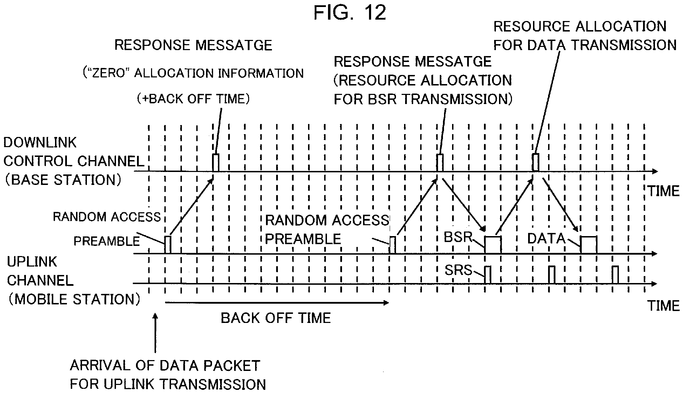

FIG.12 illustrates a flow of uplink resource allocation and data transmission (4).

In FIG. 6, the mobile station 2 already obtains a physical uplink control channel for transmitting the SR. However, in this case, when the mobile station 2 does not obtain the physical uplink control channel for transmitting the SR, it first performs the transmission of the random access signal.

Other processes may be basically the same as that of the flow of the data transmission (1).

First, the controller 30 of the mobile station 2 generates a preamble as a random access signal that is transmitted through a random access channel and then transmits the preamble from the transmitting processing unit.

The random access signal is a signal transmitted when the communication with the base station 1 starts. For example, the random access signal is transmitted in a transmission region (transmission resource) of the random access signal shared with other mobile stations.

In this example, the random access signal is received by the base station 1. The base station 1 determines that it is difficult to allocate the radio resource for transmitting the BSR (SR) because of the circumstances described above and then transmits the particular signal.

The controller 30 of the mobile station 2 receives the particular signal and then performs the regulation process.

In this case, an object of the regulation may be the transmission of the random access signal, the transmission of the SRS, and so on.

A condition of the regulation release may be any of the above conditions. However, the release of the transmission regulation of the SR is replaced with the release of the transmission regulation of the random access signal when applying the condition described above.

In this example, the condition of the regulation release is satisfied such that the controller 30 of the mobile station 2 first retransmits the random access signal.

At that time, when receiving the random access signal, the controller 10 of the base station 1 confirms whether or not the radio resource may be allocated to the mobile station 2 (whether there is space in the allocation state of the radio resource) . If the radio resource may be allocated, the controller 10 of the base station 1 notifies the mobile station 2 of the information of the selected radio resource by selecting the radio resource for the BSR transmission.

Because the mobile station 2 is allocated the radio resource for the BSR transmission, the mobile station 2 transmits the BSR by using the radio resource. Furthermore, by being allocated the radio resource for the data transmission from the base station 1, the mobile station 2 transmits the data. As with the above example, the data may be multiplexed by the BSR, and then transmitted.

In this example, the SRS is not transmitted after the transmission regulation of the random access signal is released. The transmission of the SRS starts after receiving a response from the base station 1 in response to the random access signal.

The transmission of the SRS can be started earlier than transmission of the BSR independently from the transmission of the BSR. The transmission of the SRS may be performed in a certain period by using a part of A illustrated in FIG. 7 (a slot, for instance,) in which the SRS transmitted is specified as a response signal (that includes the allocation of the radio resource for the BSR transmission) of the random access signal from the base station 1) . In this case, however, the transmission of the SRS is performed at the same time as the transmission of the BSR.

Referring to FIG. 9, the SRS is transmitted in a part (time division) labelled D surrounded by a dotted line, and the part labelled DATA is shortened by one symbol. The BSR is transmitted in the part shown by DATA. The signal such as ACK/NACK may not be transmitted, or may be time-multiplexed on the DATA part to prevent overlapping of the SRS.

In this example, the base station 1 allocates the radio resource for the BSR transmission to the mobile station 2 in response to the random access signal. However, the base station 1 may allocate the PUCCHi of FIG. 7, and then the mobile station 2 may transmit the SR first by using the PUCCHi as illustrated in FIG.6.

If the particular signal is not transmitted from the base station 1 even though the random access signal is transmitted (in the case of the silent state), the mobile station 2 does not regulate the transmission of the random access signal, for example, and may retransmit the random access signal.

### "Flow of processing (5)"

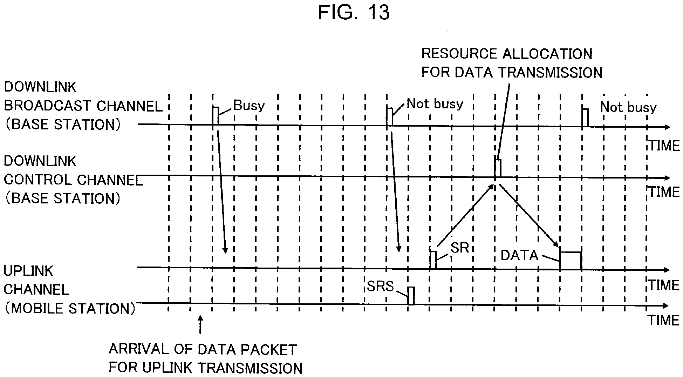

FIG.13 illustrates a flow of uplink resource allocation and data transmission (5).

In the example described above, the base station 1 transmits the particular signal in response to reception of the SR, the BSR, and the random access signal. However, in this case, the base station 1 transmits the particular signal as a broadcast signal.

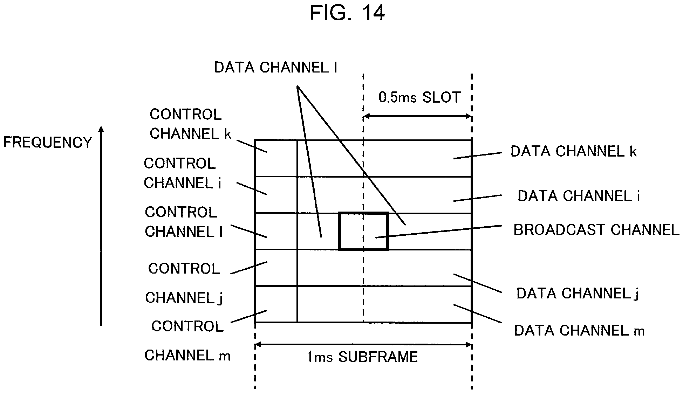

FIG.14 illustrates a configuration example used for downlink transmission (2).

At the center of the frequency band used for transmission, a frame provides a broadcast channel that has a center at a boundary part of the slot and provides data channels i, k, j, and m at the upper and lower parts of the broadcast channel and data channel 1 in the same frequency band. The control channel includes each transmission frequency of the data channels i, j, k, l, and m, and the information that may specify the transmission parameter, respectively.

The broadcast channel is a channel for transmitting the information to be notified to a plurality (entirety) of the mobile stations in a cell included in the base station 1 and may transmit the radio resource information in which the above-described random access signal is transmitted.

In this example, this broadcast information includes the particular signal.

That is, by generating the particular signal as a part of the broadcast information and relaying the particular signal to the multiplexer 13, the controller 10 of the base station 1 transmits the particular signal.

When receiving the particular signal as the broadcast information by periodically receiving the broadcast information, the mobile station 2 regulates the transmission of the SRS as described above even though there is uplink packet data to be transmitted.

Accordingly, the regulation control may be performed on a plurality of mobile stations all at once. However, in another embodiment a mobile station that is already allocated a radio resource for the data transmission or for the BSR transmission does not have to perform the regulation control even after receiving the particular signal.

Following reception of the particular signal if the particular signal is not detected in a following broadcast of the broadcast information (for example, receiving in the next period of the broadcast channel reception), the controller 30 of the mobile station 2 releases the transmission regulation of the SRS and releases the transmission regulation of the SR and then transmits the SRS and the SR, respectively. Here, the SRS is periodically transmitted separately from the SR.

After receiving the SR, the base station 1 selects the radio resource to be allocated based on the SRS, for example, and transmits the information of the allocated radio resource through the downlink channel.

Therefore, the controller 30 of the mobile station 2 transmits the data by the frequency part in which the data is transmitted according to the information of the allocated radio resource.

As illustrated in FIG.6, the base station 1 may allocate the radio resource for the BSR transmission first and then may allocate the radio resource for the data transmission later on.

### "Flow of processing (6)"

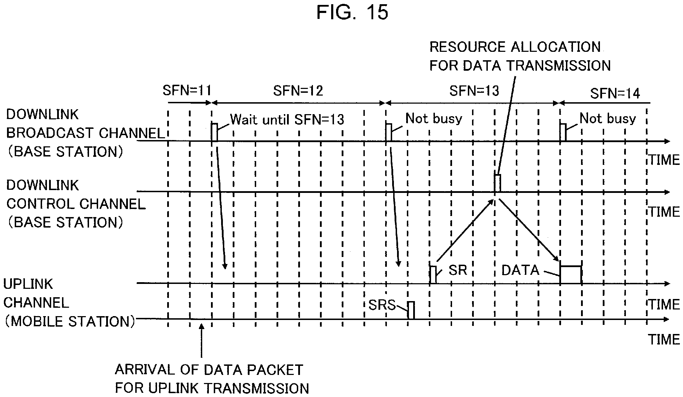

FIG.15 illustrates a flow of uplink resource allocation and data transmission (6).

The radio frame is indicated by a system frame number (SFN). The broadcast information is used to allow the mobile station 2 to specify the number of the radio frame by periodically transmitting the frame number while updating.

At the time of transmitting the particular signal, the controller 10 of the base station 1 additionally transmits certain timing information (for example, the timing at which an SFN 13 starts) and then instructs the mobile station 2 to perform control process by the certain timing information.

Therefore, by receiving the particular signal, the mobile station 2 regulates the transmission of the SRS and the SR even though there is an uplink packet to be transmitted.

Then the mobile station 2 again performs the reception of the notification information channel at the timing of the radio resource at which the SFN 13 is transmitted. After receiving the particular signal, the power of the receiving process may be turned off until the SFN 13 arrives. However, if the reception is such that it is intermittent, a separate reception is necessarily performed.

The mobile station 2 receives the radio frame of the SFN 13 and then detects that the particular signal is not transmitted (detects that the allocation of the radio resource may be performed) as the broadcast information. Then the mobile station 2 releases the transmission regulation of the SRS and SR and then performs the transmission of the SRS and the transmission of the SR. The SRS may be transmitted at the same time as the SR. In this case, however, the SRS is transmitted earlier.

After receiving the SR, the base station 1 selects the radio resource that is allocated based on the SRS, for example, and then transmits the information of the allocated radio resource through the physical downlink control channel.

Accordingly, according to the information of the allocated radio resource, the controller 30 of the mobile station 2 transmits the data in the frequency part by which the data should be transmitted.

As illustrated in FIG.6, the base station 1 may allocate the radio resource for the BSR transmission and then may allocate the radio resource for the data transmission.

The mobile station that is already allocated the radio resource for the data transmission or for the BSR transmission does not have to perform the regulation control after receiving the certain signal in another embodiment.

The flows of each process 1 to 6 described above may be combined for use.

According to the embodiment described above, it is possible to control the transmission of resource allocation requests. Further, according to the embodiment described above, it is possible to control the transmission of the radio signal used to select the radio resource, as distinct from the resource allocation request.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment (s) of the present inventions have been described in detail, it should be understood that the various changes, substitutions, and alterations could be made hereto without departing from the scope of the invention.

## Claims

1. A control method for a radio communication system, wherein a second communication apparatus (1) receives a radio signal (SR) for requesting allocation of a radio resource from a first radio communication apparatus (2), the second radio communication apparatus selects a radio resource to be allocated to the first radio communication apparatus based on a radio signal used to select the radio resource and transmits information of the selected radio resource to the first radio communication apparatus, and the first radio communication apparatus transmits transmission data by using the radio resource specified by the information, the control method comprising and **characterized by**:
regulating transmission by inhibiting the radio signal used to select the radio resource to be allocated when the first radio communication apparatus receives a particular signal from the second radio communication apparatus,
wherein the particular signal is a signal transmitted in a state in which the radio resource cannot be allocated.

2. The control method according to claim 1, wherein the radio signal used to select the radio resource is either a pilot signal (SRS) transmitted by using a plurality of frequencies in a particular frequency band or a radio signal (BSR) which shows a buffer status in the first radio communication apparatus (2).

3. The control method according to claim 1 or 2, wherein the second radio communication apparatus (1) transmits the particular signal in response to a reception of the radio signal for requesting allocation of the radio resource.

4. The control method according to claim 1, 2, or 3, wherein the second radio communication apparatus (1) transmits the particular signal as broadcast information.

5. The control method according to claim 4, wherein when the first radio communication apparatus (2) receives a signal notifying that a radio resource can be allocated from the second radio communication apparatus (1), the first radio communication apparatus releases the regulating of the transmission of the radio signal.

6. The control method according to claim 4, wherein the particular signal includes a prospective timing interval during which the state that the radio resource cannot be allocated changes, and
when the first radio communication apparatus (2) receives broadcast information indicating that a radio resource can be allocated from the second radio communication apparatus (1) at the prospective timing interval, the first radio communication apparatus releases the regulating transmission of the radio signal.

7. The control method according to any preceding claim, wherein the signal used to select the radio resource is a pilot signal (SRS) transmitted by using a plurality of frequencies in a particular frequency band, and
when the first radio communication apparatus (2) receives the particular signal from the second radio communication apparatus (1), the first radio communication apparatus regulates the transmission of the signal for requesting allocation of a radio resource, and
the regulation of the transmission of the radio signal used to select the radio resource is released at the same time as the regulation of the transmission of the signal (SR) for requesting allocation of the radio resource or at an earlier time interval or is released at the same time as transmission of a report signal of a buffer amount or at an earlier time interval.

8. A radio communication apparatus corresponding to a first radio communication apparatus (2) in a radio communication system in which the first radio communication apparatus transmits a radio signal used to select a radio resource to a second radio communication apparatus (1), and when the second radio communication apparatus receives a radio signal (SR) for requesting allocation of a radio resource, the second communication apparatus selects a radio resource to be allocated from a particular frequency band based on the radio signal used to select the radio resource, and then the first radio communication apparatus transmits transmission data by using the radio resource specified by the information of the radio resource, the radio communication apparatus comprising and **characterized by**:
a controller (30) configured to regulate by inhibiting the signal used to select a radio resource to be allocated when the radio communication apparatus receives a particular signal from the second radio communication apparatus,
wherein the particular signal is a signal transmitted in a state in which the radio resource cannot be allocated.

9. A radio communication apparatus corresponding to a second radio communication apparatus (1) in a radio communication system in which a first radio communication apparatus (2) transmits a radio signal used to select a radio resource, and when the second radio communication apparatus receives a radio signal (SR) for requesting allocation of a radio resource from the first radio communication apparatus, the second radio communication apparatus selects a radio resource to be allocated based on the radio signal used to select the radio resource, and the second radio communication apparatus transmits information of the selected radio resource to the first radio communication apparatus, and the first radio communication apparatus transmits transmission data by using the radio resource specified by the information of the radio resource, the radio communication apparatus comprising and **characterized by**:
a transmitter (18) configured to transmit a particular signal to the first radio communication apparatus to notify the first radio communication apparatus to regulate by inhibiting the radio signal used to select the radio resource to be allocated,
wherein the particular signal is a signal transmitted in a state in which the radio resource cannot be allocated.

10. A control method in a radio communication system where a second radio communication apparatus (1) receives a radio signal (SR) for requesting allocation of a radio resource from a first radio communication apparatus (2), the second radio communication apparatus selects a radio resource to be allocated and transmits information of the selected radio resource to the first radio communication apparatus, and the first radio communication apparatus transmits transmission data by using the radio resource specified by the information of the radio resource, the control method comprising and **characterized by**:
transmitting a particular signal from the second radio communication apparatus according to an allocation state of the radio resource; and
regulating transmission by inhibiting the radio signal for requesting allocation of the radio resource when the first radio communication apparatus receives the particular signal,
wherein the second radio communication apparatus transmits the particular signal when there is no radio resource that can be newly allocated.

11. The control method according to claim 10, wherein the regulation is not performed until a limit based on any time included in one or a plurality of time candidates.

12. The control method according to claim 10 or 11, wherein the particular signal includes timing information at which the regulating transmission of the radio signal (SR) should be released, and the second radio communication apparatus (1) releases the regulating transmission of the radio signal according to the timing information.

13. The control method according to claim 10, wherein the second radio communication apparatus (1) transmits the particular signal in response to reception of either a random access signal or a scheduling request signal.

14. The control method according to claim 10, wherein the radio signal (SR) for requesting allocation of the radio resource is either a random access signal or a scheduling request signal.

15. A radio communication apparatus corresponding to a first radio communication apparatus (2) in a radio communication system in which the first radio communication apparatus transmits a radio signal (SR) for requesting allocation of a radio resource to a second radio communication apparatus (1), and when the second communication apparatus receives a radio signal for requesting allocation of a radio resource from the first radio communication apparatus, the second radio communication apparatus selects a radio resource to be allocated and then transmits information of the selected radio resource to the first radio communication apparatus, and the first radio communication apparatus transmits transmission data by using the radio resource specified by the information of the radio resource, the radio communication apparatus comprising and **characterized by**:
a receiver (41) configured to receive a particular signal transmitted from the second radio communication apparatus according to an allocation state of the radio resource; and
a controller (30) configured to regulate by inhibiting the signal for requesting allocation of the radio resource when the particular signal is received by the receiver,
wherein the second radio communication apparatus transmits the particular signal when there is no radio resource that can be newly allocated.

16. A radio communication apparatus corresponding to a second radio communication apparatus (1) in a radio communication system in which a first radio communication apparatus (2) transmits a radio signal (SR) for requesting allocation of a radio resource to the second radio communication apparatus, and when the second radio communication apparatus receives a radio signal for requesting allocation of a radio resource, the second radio communication apparatus selects a radio resource to be allocated, and then transmits information of the selected radio resource to the first radio communication apparatus, and the first radio communication apparatus transmits transmission data by using the radio resource specified by the information of the radio resource, the radio communication apparatus comprising and **characterized by**:
a transmitter (18) configured to transmit a particular signal to notify the first radio communication apparatus to regulate, by inhibiting, the radio signal for requesting allocation of a radio resource to the second radio communication apparatus, and
wherein the transmitter transmits the particular signal when there is no radio resource that can be newly allocated.

## Patentansprüche

1. Steuerverfahren für ein Funkkommunikationssystem, wobei eine zweite Funkkommunikationsvorrichtung (1) ein Funksignal (SR) zur Anforderung der Zuweisung einer Funkressource von einer ersten Funkkommunikationsvorrichtung (2) empfängt, wobei die zweite Funkkommunikationsvorrichtung eine der ersten Funkkommunikationsvorrichtung zuzuweisenden Funkressource auf Basis eines Funksignals auswählt, das zum Auswählen der Funkressource verwendet wird, und eine Information über die ausgewählte Funkressource an die erste Funkkommunikationsvorrichtung sendet, und wobei die erste Funkkommunikationsvorrichtung Sendedaten sendet, indem die durch die Informationen angegebene Funkressource verwendet wird, wobei das Steuerverfahren umfasst und **gekennzeichnet ist durch**:
das Regeln des Sendens **durch** das Hemmen des Funksignals, das zum Auswählen der zuzuweisenden Funkressource verwendet wird, wenn die erste Funkkommunikationsvorrichtung ein spezielles Signal von der zweiten Funkkommunikationsvorrichtung empfängt,
wobei das spezielle Signal ein Signal ist, das in einem Zustand gesendet wird, in dem die Funkressource nicht zugewiesen werden kann.

2. Steuerverfahren nach Anspruch 1, wobei das zum Auswählen der Funkressource verwendete Funksignal entweder ein Pilotsignal (SRS), das unter Verwendung mehrerer Frequenzen in einem speziellen Frequenzband gesendet wird, oder ein Funksignal (BSR), das in der ersten Funkkommunikationsvorrichtung (2) einen Pufferzustand zeigt, ist.

3. Steuerverfahren nach Anspruch 1 oder 2, wobei die zweite Funkkommunikationsvorrichtung (1) das spezielle Signal in Reaktion auf einen Empfang des Funksignals zur Anforderung der Zuweisung der Funkressource sendet.

4. Steuerverfahren nach Anspruch 1, 2, oder 3, wobei die zweite Funkkommunikationsvorrichtung (1) das spezielle Signal als Übertragungsinformation sendet.

5. Steuerverfahren nach Anspruch 4, wobei, wenn die erste Funkkommunikationsvorrichtung (2) ein Signal empfängt, das mitteilt, dass eine Funkressource von der zweiten Funkkommunikationsvorrichtung (1) zugewiesen werden kann, die erste Funkkommunikationsvorrichtung das Regeln des Sendens des Funksignals auslöst.

6. Steuerverfahren nach Anspruch 4, wobei das spezielle Signal ein prospektives Zeitintervall beinhaltet, während dessen sich der Zustand, dass die Funkressource nicht zugewiesen werden kann, ändert, und
wenn die erste Funkkommunikationsvorrichtung (2) eine Übertragungsinformation empfängt, die anzeigt, dass eine Funkressource von der zweiten Funkkommunikationsvorrichtung (1) in dem prospektiven Zeitintervall zugewiesen werden kann, die erste Funkkommunikationsvorrichtung das Regeln des Sendens des Funksignals auslöst.

7. Steuerverfahren nach einem vorhergehenden Anspruch, wobei das zum Auswählen der Funkressource verwendete Signal ein Pilotsignal (SRS) ist, das unter Verwendung mehrerer Frequenzen in einem speziellen Frequenzband gesendet wird, und
wenn die erste Funkkommunikationsvorrichtung (2) das spezielle Signal von der zweiten Funkkommunikationsvorrichtung (1) empfängt, die erste Funkkommunikationsvorrichtung das Senden des Signals zur Anforderung der Zuweisung einer Funkressource regelt, und
das Regeln der Übertragung des zum Auswählen der Funkressource verwendeten Funksignals gleichzeitig mit dem Regeln der Übertragung des Signals (SR) zur Anforderung der Zuweisung der Funkressource oder in einem früheren Zeitintervall ausgelöst wird oder gleichzeitig mit der Übertragung eines Berichtsignals über eine Puffermenge oder in einem früheren Zeitintervall ausgelöst wird.

8. Funkkommunikationsvorrichtung, die einer ersten Funkkommunikationsvorrichtung (2) in einem Funkkommunikationssystem entspricht, in dem die erste Funkkommunikationsvorrichtung ein zum Auswählen einer Funkressource verwendetes Funksignal an eine zweite Funkkommunikationsvorrichtung (1) sendet, und wenn die zweite Funkkommunikationsvorrichtung ein Funksignal (SR) zur Anforderung der Zuweisung einer Funkressource empfängt, die zweite Funkkommunikationsvorrichtung eine von einem speziellen Frequenzband zuzuweisende Funkressource auf Basis des zum Auswählen der Funkressource verwendeten Funksignals auswählt, und die erste Funkkommunikationsvorrichtung anschließend Sendedaten sendet, indem die von der Funkressourceninformation angegebene Funkressource verwendet wird, wobei die Funkkommunikationsvorrichtung umfasst und **gekennzeichnet ist durch**:
eine Steuereinrichtung (30), die dafür ausgelegt ist, das zum Auswählen einer zuzuweisenden Funkressource verwendete Signal **durch** Hemmen zu regeln, wenn die Funkkommunikationsvorrichtung ein spezielles Signal von der zweiten Funkkommunikationsvorrichtung empfängt,
wobei das spezielle Signal ein Signal ist, das in einem Zustand gesendet wird, in dem die Funkressource nicht zugewiesen werden kann.

9. Funkkommunikationsvorrichtung, die einer zweiten Funkkommunikationsvorrichtung (1) in einem Funkkommunikationssystem entspricht, in dem eine erste Funkkommunikationsvorrichtung (2) ein zum Auswählen einer Funkressource verwendetes Funksignal sendet, und wenn die zweite Funkkommunikationsvorrichtung ein Funksignal (SR) zur Anforderung der Zuweisung einer Funkressource von der ersten Funkkommunikationsvorrichtung empfängt, die zweite Funkkommunikationsvorrichtung eine zuzuweisende Funkressource auf Basis des zum Auswählen der Funkressource verwendeten Funksignals auswählt, und die zweite Funkkommunikationsvorrichtung die Information über die ausgewählte Funkressource an die erste Funkkommunikationsvorrichtung sendet, und wobei die erste Funkkommunikationsvorrichtung Sendedaten sendet, indem die durch die Funkressourceninformationen angegebene Funkressource verwendet wird, wobei die Funkkommunikationsvorrichtung umfasst und **gekennzeichnet ist durch**:
einen Sender (18), der dafür ausgelegt ist, ein spezielles Signal an die erste Funkkommunikationsvorrichtung zu senden, um der ersten Funkkommunikationsvorrichtung mitzuteilen, das zum Auswählen der zuzuweisenden Funkressource verwendete Funksignal **durch** Hemmen zu regeln,
wobei das spezielle Signal ein Signal ist, das in einem Zustand gesendet wird, in dem die Funkressource nicht zugewiesen werden kann.

10. Steuerverfahren in einem Funkkommunikationssystem, wobei eine zweite Funkkommunikationsvorrichtung (1) ein Funksignal (SR) zur Anforderung der Zuweisung einer Funkressource von einer ersten Funkkommunikationsvorrichtung (2) empfängt, wobei die zweite Funkkommunikationsvorrichtung eine zuzuweisende Funkressource auswählt und eine Information über die ausgewählte Funkressource an die erste Funkkommunikationsvorrichtung sendet, und wobei die erste Funkkommunikationsvorrichtung Sendedaten sendet, indem die von der Funkressourceninformation angegebene Funkressource verwendet wird, wobei das Steuerverfahren umfasst und **gekennzeichnet ist durch**:
das Senden eines speziellen Signals von der zweiten Funkkommunikationsvorrichtung gemäß einem Zuweisungsstatus der Funkressource; und
das Regeln des Sendens des Funksignals zur Anforderung der Zuweisung der Funkressource **durch** Hemmen, wenn die erste Funkkommunikationsvorrichtung das spezielle Signal empfängt,
wobei die zweite Funkkommunikationsvorrichtung das spezielle Signal sendet, wenn keine Funkressource vorhanden ist, die neu zugewiesen werden kann.

11. Steuerverfahren nach Anspruch 10, wobei das Regeln bis zu einem Limit nicht durchgeführt wird, das auf einer Zeit basiert, die in einem oder mehreren Zeitkandidaten enthalten ist.

12. Steuerverfahren nach Anspruch 10 oder 11, wobei das spezielle Signal eine Informationen über die Zeit enthält, zu der das Regeln des Sendens des Funksignals (SR) ausgelöst werden sollte, und wobei die zweite Funkkommunikationsvorrichtung (1) das Regeln des Sendens des Funksignals gemäß der Zeitinformation auslöst.

13. Steuerverfahren nach Anspruch 10, wobei die zweite Funkkommunikationsvorrichtung (1) das spezielle Signal in Reaktion auf den Empfang entweder eines Zufallszugriffsignals oder eines Zeitplanungsanforderungssignals sendet.

14. Steuerverfahren nach Anspruch 10, wobei das Funksignal (SR) zur Anforderung der Zuweisung der Funkressource entweder ein Zufallszugriffsignal oder ein Zeitplanungsanforderungssignal ist.

15. Funkkommunikationsvorrichtung, die einer ersten Funkkommunikationsvorrichtung (2) in einem Funkkommunikationssystem entspricht, in dem die erste Funkkommunikationsvorrichtung ein Funksignal (SR) zur Anforderung der Zuweisung einer Funkressource an eine zweite Funkkommunikationsvorrichtung (1) sendet, und wenn die zweite Funkkommunikationsvorrichtung ein Funksignal zur Anforderung der Zuweisung einer Funkressource von der ersten Funkkommunikationsvorrichtung erhält, die zweite Funkkommunikationsvorrichtung eine zuzuweisende Funkressource auswählt und anschließend eine Information über die ausgewählte Funkressource an die erste Funkkommunikationsvorrichtung sendet, und wobei die erste Funkkommunikationsvorrichtung Sendedaten sendet, indem die von der Funkressourceninformation angegebene Funkressource verwendet wird, wobei die Funkkommunikationsvorrichtung umfasst und **gekennzeichnet ist durch**:
einen Empfänger (41), der dafür ausgelegt, ist, ein spezielles Signal zu empfangen, das von der zweiten Funkkommunikationsvorrichtung gemäß einem Zuweisungsstatus der Funkressource gesendet wird; und
eine Steuereinrichtung (30), die dafür ausgelegt ist, das Signal zur Anforderung der Zuweisung der Funkressource **durch** Hemmen zu regeln, wenn das spezielle Signal **durch** den Empfänger empfangen wird,
wobei die zweite Funkkommunikationsvorrichtung das spezielle Signal sendet, wenn keine Funkressource vorhanden ist, die neu zugewiesen werden kann.

16. Funkkommunikationsvorrichtung, die einer zweiten Funkkommunikationsvorrichtung (1) in einem Funkkommunikationssystem entspricht, in dem eine erste Funkkommunikationsvorrichtung (2) ein Funksignal (SR) zur Anforderung der Zuweisung einer Funkressource an die zweite Funkkommunikationsvorrichtung sendet, und wenn die zweite Funkkommunikationsvorrichtung ein Funksignal zur Anforderung der Zuweisung einer Funkressource empfängt, die zweite Funkkommunikationsvorrichtung eine zuzuweisende Funkressource auswählt und anschließend eine Information über die ausgewählte Funkressource an die erste Funkkommunikationsvorrichtung sendet, und wobei die erste Funkkommunikationsvorrichtung Sendedaten sendet, indem die durch die Funkressourceninformation angegebene Funkressource verwendet wird, wobei die Funkkommunikationsvorrichtung umfasst und **gekennzeichnet ist durch**:
einen Sender (18), der dafür ausgelegt ist, ein spezielles Signal zu senden, um der ersten Funkkommunikationsvorrichtung mitzuteilen, das Funksignal zur Anforderung der Zuweisung einer Funkressource an die zweite Funkkommunikationsvorrichtung **durch** Hemmen zu regeln; und
wobei der Sender das spezielle Signal sendet, wenn keine Funkressource vorhanden ist, die neu zugewiesen werden kann.

## Revendications

1. Procédé de commande pour un système de communication radio, dans lequel un second appareil de communication (1) reçoit un signal radio (SR) pour demander l'affectation d'une ressource radio en provenance d'un premier appareil de communication radio (2), le second appareil de communication radio sélectionne une ressource radio à affecter au premier appareil de communication radio sur la base d'un signal radio utilisé pour sélectionner la ressource radio, et transmet des informations de la ressource radio sélectionnée au premier appareil de communication radio, et le premier appareil de communication radio transmet des données de transmission en utilisant la ressource radio spécifiée par les informations, le procédé de commande comprenant et étant **caractérisé par** l'étape ci-dessous consistant à :
réguler la transmission en inhibant le signal radio utilisé pour sélectionner la ressource radio à affecter lorsque le premier appareil de communication radio reçoit un signal spécifique en provenance du second appareil de communication radio ;
dans lequel le signal spécifique est un signal transmis dans un état dans lequel la ressource radio ne peut pas être affectée.

2. Procédé de commande selon la revendication 1, dans lequel le signal radio utilisé pour sélectionner la ressource radio est soit un signal pilote (SRS) transmis en utilisant une pluralité de fréquences dans une bande de fréquence spécifique, soit un signal radio (BSR) qui indique un état de mémoire tampon dans le premier appareil de communication radio (2).

3. Procédé de commande selon la revendication 1 ou 2, dans lequel le second appareil de communication radio (1) transmet le signal spécifique en réponse à la réception du signal radio visant à demander l'affectation de la ressource radio.

4. Procédé de commande selon la revendication 1, 2 ou 3, dans lequel le second appareil de communication radio (1) transmet le signal spécifique sous la forme d'informations de diffusion.

5. Procédé de commande selon la revendication 4, dans lequel, lorsque le premier appareil de communication radio (2) reçoit un signal notifiant qu'une ressource radio peut être affectée à partir du second appareil de communication radio (1), le premier appareil de communication radio libère la régulation de la transmission du signal radio.

6. Procédé de commande selon la revendication 4, dans lequel le signal spécifique inclut un intervalle de temporisation prospectif au cours duquel est modifié l'état dans lequel la ressource radio ne peut pas être affectée ; et
lorsque le premier appareil de communication radio (2) reçoit des informations de diffusion indiquant qu'une ressource radio peut être affectée à partir du second appareil de communication radio (1) à l'intervalle de temporisation prospectif, le premier appareil de communication radio libère la régulation de la transmission du signal radio.

7. Procédé de commande selon l'une quelconque des revendications précédentes, dans lequel le signal utilisé pour sélectionner la ressource radio est un signal pilote (SRS) transmis en utilisant une pluralité de fréquences dans une bande de fréquence spécifique ; et
lorsque le premier appareil de communication radio (2) reçoit le signal spécifique en provenance du second appareil de communication radio (1), le premier appareil de communication radio régule la transmission du signal visant à demander l'affectation d'une ressource radio ; et
la régulation de la transmission du signal radio utilisé pour sélectionner la ressource radio est libérée en même temps que la régulation de la transmission du signal (SR) visant à demander l'affectation de la ressource radio, ou à un intervalle de temps antérieur, ou est libérée en même temps que la transmission d'un signal de rapport d'une quantité de mémoire tampon, ou à un intervalle de temps antérieur.

8. Appareil de communication radio correspondant à un premier appareil de communication radio (2) dans un système de communication radio dans lequel le premier appareil de communication radio transmet un signal radio utilisé pour sélectionner une ressource radio à un second appareil de communication radio (1), et lorsque le second appareil de communication radio reçoit un signal radio (SR) visant à demander l'affectation d'une ressource radio, le second appareil de communication sélectionne une ressource radio à affecter dans une bande de fréquence spécifique, sur la base du signal radio utilisé pour sélectionner la ressource radio, et ensuite le premier appareil de communication radio transmet des données de transmission en utilisant la ressource radio spécifiée par les informations de la ressource radio, l'appareil de communication radio comprenant et étant **caractérisé par** :
un contrôleur (30) configuré de manière à réguler la transmission en inhibant le signal utilisé pour sélectionner une ressource radio à affecter lorsque l'appareil de communication radio reçoit un signal spécifique en provenance du second appareil de communication radio ;
dans lequel le signal spécifique est un signal transmis dans un état dans lequel la ressource radio ne peut pas être affectée.

9. Appareil de communication radio correspondant à un second appareil de communication radio (1) dans un système de communication radio dans lequel un premier appareil de communication radio (2) transmet un signal radio utilisé pour sélectionner une ressource radio, et lorsque le second appareil de communication radio reçoit un signal radio (SR) visant à demander l'affectation d'une ressource radio à partir du premier appareil de communication radio, le second appareil de communication radio sélectionne une ressource radio à affecter sur la base du signal radio utilisé pour sélectionner la ressource radio, et le second appareil de communication radio transmet des informations de la ressource radio sélectionnée au premier appareil de communication radio, et le premier appareil de communication radio transmet des données de transmission en utilisant la ressource radio spécifiée par les informations de la ressource radio, l'appareil de communication radio comprenant et étant **caractérisé par** :
un émetteur (18) configuré de manière à transmettre un signal spécifique au premier appareil de communication radio pour notifier au premier appareil de communication radio de réguler la transmission en inhibant le signal radio utilisé pour sélectionner la ressource radio à affecter ;
dans lequel le signal spécifique est un signal transmis dans un état dans lequel la ressource radio ne peut pas être affectée.

10. Procédé de commande dans un système de communication radio où un second appareil de communication radio (1) reçoit un signal radio (SR) visant à demander l'affectation d'une ressource radio à partir d'un premier appareil de communication radio (2), le second appareil de communication radio sélectionne une ressource radio à affecter et transmet des informations de la ressource radio sélectionnée au premier appareil de communication radio, et le premier appareil de communication radio transmet des données de transmission en utilisant la ressource radio spécifiée par les informations de la ressource radio, le procédé de commande comprenant et étant **caractérisé par** les étapes ci-dessous consistant à :
transmettre un signal spécifique à partir du second appareil de communication radio selon un état d'affectation de la ressource radio ; et
réguler la transmission en inhibant le signal radio visant à demander l'affectation de la ressource radio lorsque le premier appareil de communication radio reçoit le signal spécifique ;
dans lequel le second appareil de communication radio transmet le signal spécifique lorsqu'il n'existe aucune ressource radio pouvant être nouvellement affectée.

11. Procédé de commande selon la revendication 10, dans lequel la régulation n'est pas mise en oeuvre avant une limite basée sur un temps quelconque inclus dans un ou plusieurs candidats de temps.

12. Procédé de commande selon la revendication 10 ou 11, dans lequel le signal spécifique inclut des informations de temporisation où la régulation de la transmission du signal radio (SR) devrait être libérée, et le second appareil de communication radio (1) libère la régulation de la transmission du signal radio selon les informations de temporisation.

13. Procédé de commande selon la revendication 10, dans lequel le second appareil de communication radio (1) transmet le signal spécifique en réponse à la réception d'un signal d'accès aléatoire ou d'un signal de demande de planification.

14. Procédé de commande selon la revendication 10, dans lequel le signal radio (SR) visant à demander l'affectation de la ressource radio est un signal d'accès aléatoire ou un signal de demande de planification.

15. Appareil de communication radio correspondant à un premier appareil de communication radio (2) dans un système de communication radio où le premier appareil de communication radio transmet un signal radio (SR) visant à demander l'affectation d'une ressource radio à un second appareil de communication radio (1), et lorsque le second appareil de communication reçoit un signal radio visant à demander l'affectation d'une ressource radio à partir du premier appareil de communication radio, le second appareil de communication radio sélectionne une ressource radio à affecter, et transmet ensuite des informations de la ressource radio sélectionnée au premier appareil de communication radio, et le premier appareil de communication radio transmet des données de transmission en utilisant la ressource radio spécifiée par les informations de la ressource radio, l'appareil de communication radio comprenant et étant **caractérisé par** :
un récepteur (41) configuré de manière à recevoir un signal spécifique transmis à partir du second appareil de communication radio selon un état d'affectation de la ressource radio ; et
un contrôleur (30) configuré de manière à réguler la transmission en inhibant le signal visant à demander l'affectation de la ressource radio lorsque le signal spécifique est reçu par le récepteur ;
dans lequel le second appareil de communication radio transmet le signal spécifique lorsqu'il n'existe aucune ressource radio pouvant être nouvellement affectée.

16. Appareil de communication radio correspondant à un second appareil de communication radio (1) dans un système de communication radio dans lequel un premier appareil de communication radio (2) transmet un signal radio (SR) visant à demander l'affectation d'une ressource radio au second appareil de communication radio, et lorsque le second appareil de communication radio reçoit un signal radio visant à demander l'affectation d'une ressource radio, le second appareil de communication radio sélectionne une ressource radio à affecter, et transmet ensuite des informations de la ressource radio sélectionnée au premier appareil de communication radio, et le premier appareil de communication radio transmet des données de transmission en utilisant la ressource radio spécifiée par les informations de la ressource radio, l'appareil de communication radio comprenant et étant **caractérisé par** :
un émetteur (18) configuré de manière à transmettre un signal spécifique visant à notifier au premier appareil de communication radio de réguler la transmission en inhibant le signal radio visant à demander l'affectation d'une ressource radio au second appareil de communication radio ; et
dans lequel l'émetteur transmet le signal spécifique lorsqu'il n'existe aucune ressource radio pouvant être nouvellement affectée.
